Europäisches Patentamt

(19) European Patent Office

Office européen des brevets

(11) Publication number: **0 445 906 A1**

## (12) EUROPEAN PATENT APPLICATION

(21) Application number: **91300256.4**

(22) Date of filing: **15.01.91**

(51) Int. Cl.⁵: **G06F 3/033**

The title of the invention has been amended (Guidelines for Examination in the EPO, A-III, 7.3).

(30) Priority: **19.01.90 JP 9634/90**

(43) Date of publication of application:
**11.09.91 Bulletin 91/37**

(84) Designated Contracting States:
**DE FR GB**

(71) Applicant: **SONY CORPORATION**
**7-35 Kitashinagawa 6-Chome Shinagawa-ku**
**Tokyo 141 (JP)**

(72) Inventor: **Hirayama, Tomoshi, c/o Patent Division**
**Sony Corporation, 6-7-35 Kitashinagawa**
**Shinagawa-ku, Tokyo 141 (JP)**

(74) Representative: **Thomas, Christopher Hugo et al**
**D Young & Co 10 Staple Inn**
**London WC1V 7RD (GB)**

(54) **Cursor display control in a hand-written information apparatus.**

(57) A hand-written information input apparatus comprises a display section (1) for displaying predetermined video image data and a cursor (4) at a position corresponding to coordinates of a pen (3), an input section (2) arranged upon the display section (1) for inputting coordinate information, the pen (3) for instructing coordinates on the input section (2), a first cursor display control device (21) for displaying the cursor (4) at a corresponding position on the display section (1) when the pen (3) is located within a first predetermined distance from the input section (2), and a second cursor display control device (21) for erasing the cursor (4) on the display section (1) when the pen (3) is located with a second predetermined distance from the input section (2), the second predetermined distance being less than the first predetermined distance.

EP 0 445 906 A1

*FIG. 1A*

## HAND-WRITTEN INFORMATION INPUT APPARATUS

This invention relates to hand-written information input apparatus which may be used, for example for inputting hand-written information into a very small hand-held type computer.

As a hand-written information input apparatus for a very small computer, there has been proposed a device comprising a display section formed of a liquid crystal display (LCD) and an input section formed of a transparent touch sensor arranged one upon the other. Hand-written information is written on the input section by an input pen, whereby it can be displayed on the display section and input to the computer.

According to the present invention there is provided a hand-written information input apparatus comprising:

a display section for displaying predetermined video image data and a cursor at a position corresponding to coordinates of a pen;

an input section arranged upon said display section for inputting coordinate information;

said pen for instructing coordinates on said input section;

first cursor display control means for displaying cursor at a corresponding position on said display section when said pen is located within a first predetermined distance from said input section; and

second cursor display control means for erasing said cursor on said display section when said pen is located within a second predetermined distance from said input section, said second predetermined distance being less than said first predetermined distance.

The invention will now be described by way of example with reference to the accompanying drawings, throughout which like parts are referred to by like references, and in which:

Figures 1A and 1B are schematic diagrams of examples of a display picture screen of the embodiment;

Figures 2A to 2C are explanatory diagrams;

Figure 3 is a perspective view of an embodiment of hand-written information processing apparatus according to the present invention.

Figure 4 is a block diagram of the embodiment; and

Figure 5 (formed of Figures 5A and 5B) is a flowchart.

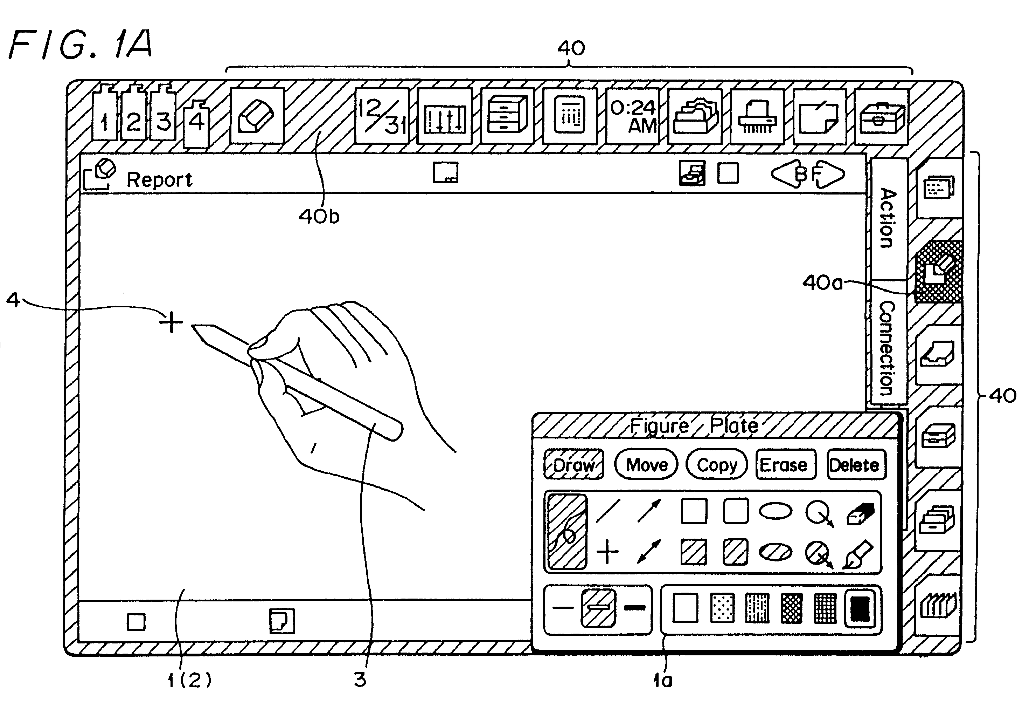

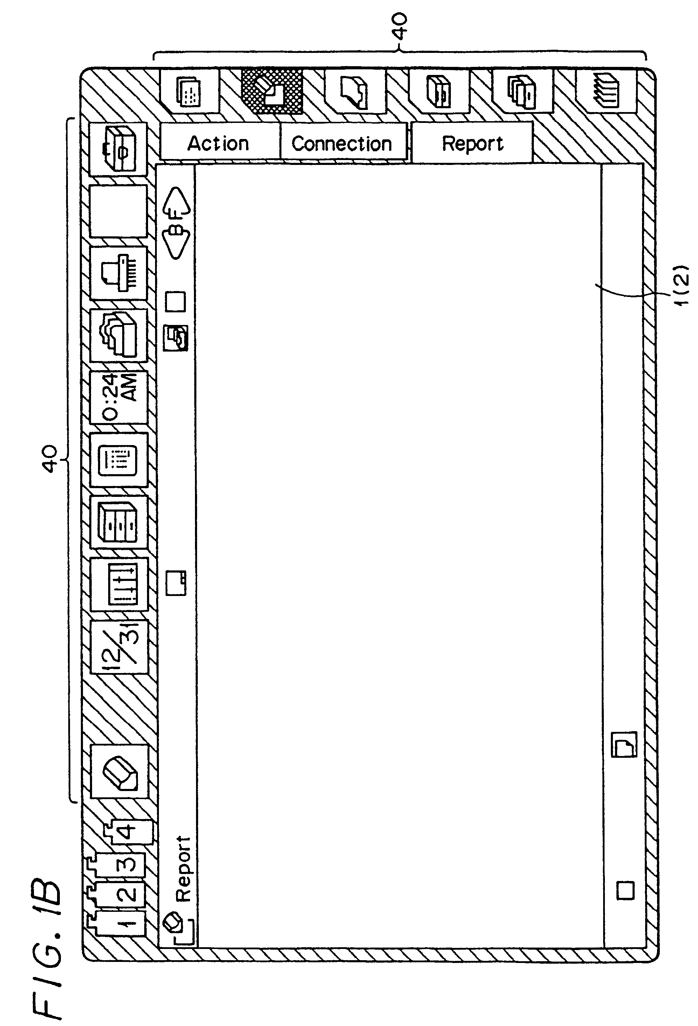

The embodiment to be is applied to a very small computer, and as shown in Figures 1 to 3 includes a display section 1 formed of an (LCD) device or the like. The display section 1 displays thereon video image data supplied thereto from a CPU or the like which will be referred to later. An input section containing an input tablet 2 formed of a transparent touch sensor or the like is provided on the surface of the display section 1. The display section 1 is formed of 512 dots x 342 dots, and the resolution of the input tablet 2 is 1536 dots x 1026 dots, which is three times that of the display section 1. A pen 3 is used to input data in cooperation with the input tablet 2. When the point of the pen 3 is brought into contact with or approaches the input tablet 2, the xy coordinates at which the point of the pen 3 is brought into contact with or approaches the input tablet 2 are detected by a central processing unit (CPU) 21, for example, by means of the change of electrostatic capacity or the change of magnetic field. When the user touches the input tablet 2 with the point of the pen 3 (this will be hereinafter referred to as a pen-down), contact position information of the point of the pen 3 is supplied to the CPU 21, whereby the input of data is performed. Pen-down means that a coordinate point specified by the point of the pen 3 or by touching the input tablet 2 with, for example, the pen 3 is detected, and that various operations to be controlled in response to the co-ordinate point (for example, displaying a locus of the pen 3, or displaying an icon, which will be referred to later) are effected.

For detecting the presence or absence of the pen-down state, the following methods are known, in which a switch means such as a micro-switch is provided in the point of the pen 3 or in the input tablet 2, and it is determined whether or not the switch means is turned ON or OFF by the contact or the depression of the pen 3 on the input tablet 2, and in which it is determined whether or not a change of magnetic field or electrostatic capacity exceeds a particular threshold level.

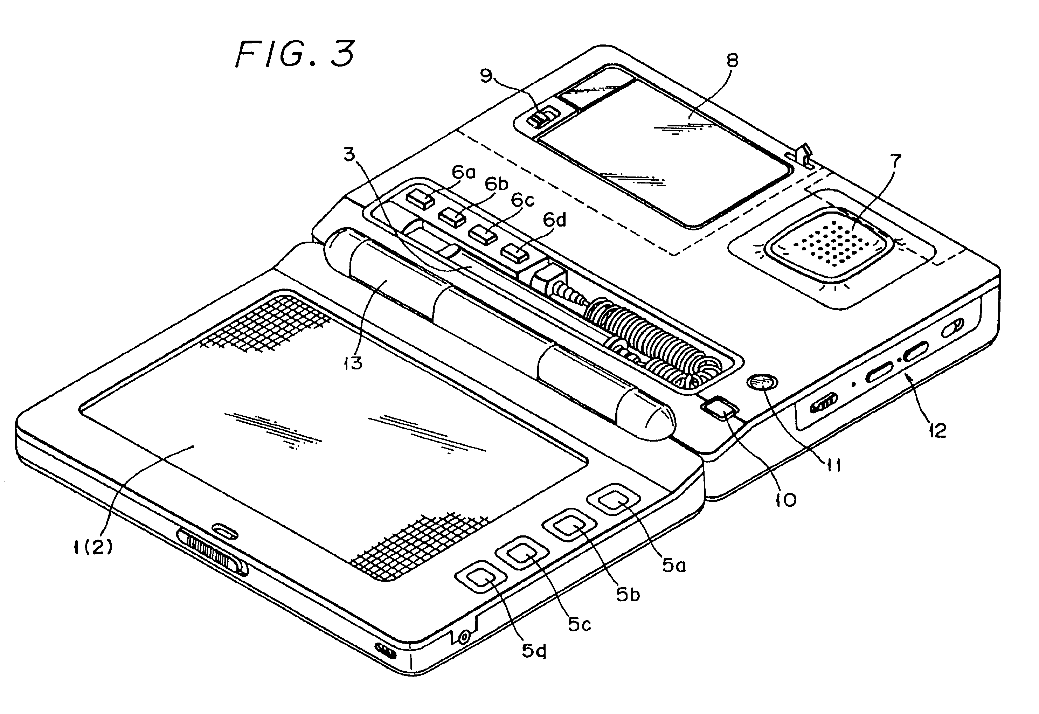

In Figure 3 are shown key switches 5a to 5d and 6a to 6d whose signals are supplied to the CPU 21. The apparatus also comprises a loudspeaker 7, a battery compartment 8 in which a power source battery is accommodated under a lid having a releasable locking mechanism 9, a power switch 10, a microphone 11, and an operation key group 12 which is used to perform solid state recording. By operating the operation key group 12, an audio signal fed to the microphone 11 is recorded and can be reproduced from the loudspeaker 7. Further, there are provided sockets or the like into which integrated circuit (IC) cards such as a read only memory (ROM) or a random access memory (RAM) are inserted, and expansion sockets are also provided to connect this apparatus to an external apparatus. A hinge 12 incorporates therein a flexible printed circuit board to transmit signals. The hinge 13 enables the apparatus to be folded in half.

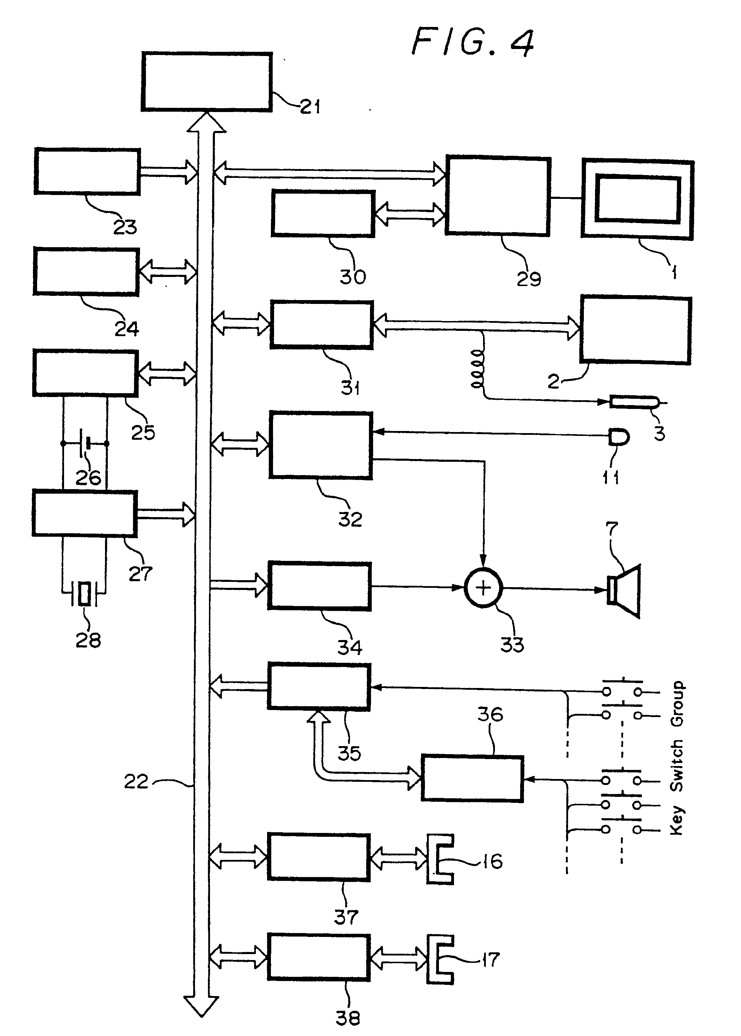

Referring to Figure 4, there is shown the CPU 21 to which various function ICs and so on are connected through a bus line 22. A ROM 23 is connected through the bus line 22 to the CPU 21, and in addition to a system program for controlling the entirety of this apparatus, a kana-kanji conversion program for word processing, a dictionary table therefore, a hand-written input information recognition program, and a dictionary table or the like therefore are written in the ROM 23.

A RAM 24 provides a work area, and there is a back-up RAM 25 to which a power source 26 is connected. A timer IC 27 is driven by the power source 26. The timer IC 27 counts clocks generated from a quartz oscillator 28, and continuously outputs date and time data.

Connections between this hardware and respective sections in Figures 1 to 3 will now be explained with reference to Figure 4.

A display controller 29 is shown to control the display section 1. The display controller 29 is controlled by the CPU 21, and display data derived by the CPU 21 are written in a V-RAM 30. Also, data written in the V-RAM 30 are supplied through the display controller 29 to the display section 1, thereby being displayed in a predetermined manner.

A tablet interface circuit 31 is provided for the input tablet 2 integrally formed with the display section 1, and the pen 3. By way of the interface circuit 31, data or the like written in the input tablet 2 are supplied to the CPU 21, in which it is processed in a predetermined manner.

A solid state recording processing circuit 32 is provided to process an audio signal from the microphone 11 in a predetermined manner such as an analogue-to-digital (A/D) conversion. The thus processed signal is stored in the back-up RAM 25 through the CPU 21. Audio data stored in the back-up RAM 25 are supplied to the recording processing circuit 32, in which they are processed in a predetermined manner such as a digital-to-analogue (D/A) conversion, the thus processed signal being fed through a mixer 33 to the loudspeaker 7. A dialler circuit 34 generates, when supplied with arbitrary data, such as a telephone number, from the CPU 21, an acoustic signal corresponding to a dual tone signal such as a telephone number of a so-called push-button phone. This acoustic signal from the dialler circuit 34 is supplied through the mixer 33 to the loudspeaker 7.

A key interface circuit 35 receives directly or through a power source circuit 36, signals from a key switch group such as the above-mentioned keys 5a to 5d, 6a to 6d, 10 and 12. From the key interface circuit 35, a signal converted in a predetermined manner is supplied to the CPU 21. Key switches other than the power switch 10, the key switches 6a to 6d and the stop button are connected through the power source circuit 36 to the interface circuit 35. When these key switches are operated, the power source circuit 36 is actuated first, and then information indicative of the ON or OFF state of these key switches is supplied to the key interface circuit 35.

An IC card interface circuit 37 and an expansion interface circuit 38 are connected to sockets 16 and 17 and the bus line 22. The IC card interface circuit 37 is used to connect an IC card to this apparatus, and the expansion interface circuit 38 is used to connect this apparatus to external apparatus when the system of this hand-written information input apparatus is expanded.

In this embodiment, when the power switch 10 is turned ON, the display section 1 displays on its display screen predetermined function display mark (icon) groups 40 on the upper and right portions of an Image displayed on the display section 1 as shown in Figure 1B. When the user draws desired figures or the like from a plurality of icon groups 40 and when a character, a figure or the like are input by a hand-writing process, the user selects an icon 40a of [write] mark displayed on the right hand side of the display section 1 by the pen-down operation. At that time, as shown in Figures 1A, the icon 40a of [write] is displayed in the hatched condition thereby to indicate the selection of [write] function. Further, at that time, "report" is selected, and a picture of "report" is displayed on the display section 1 as shown in Figure 1A.

Then, an icon 40b of [figure] mark on the upper portion of the display section 1 is selected by the pen-down operation of the point of the pen 3 and is drawn to a predetermined position, for example, at a lower right portion of the picture screen of the display section 1, whereby, as shown in Figure 1A, a picture of a hand-writing input figure plate 1a is selected and displayed on the display section 1 in a superimposed state on the picture of "report". When the figure plate 1a is picked up, [draw] on the figure plate 1a is automatically selected and the apparatus is placed in the picture drawing mode. Thus, an arbitrary figure, character, symbol and so on can be drawn on the blank space of the picture screen of "report" on the display section 1. Accordingly, the drawn picture is displayed on the display section 1 and is also input to the CPU 21 via the input tablet 2.

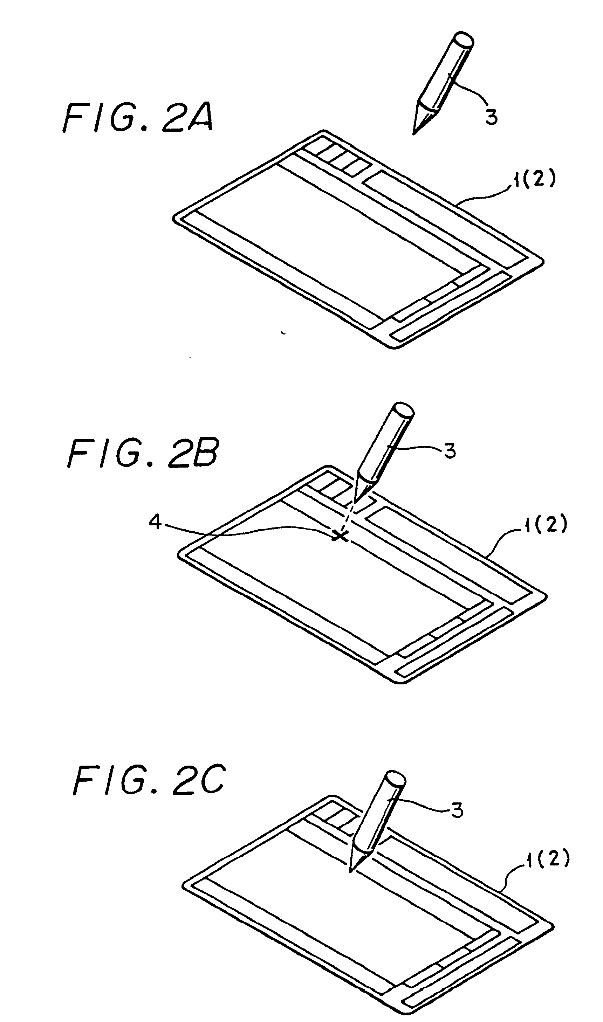

In this embodiment, when the pen 3 and the input tablet 2 are distant from each other as shown in Figure 2A, the cursor is not displayed on the picture screen of the display section 1. When the pen 3 and the input tablet 2 are close to each other as shown in Figure 2B, the cross-shaped cursor 4 is displayed on the display section 1 at its position corresponding to the point of the pen 3 on the input tablet 2 as shown in Figure 1B. When the pen 3 is placed in the pen-down state on the input tablet 2 as shown in Figure 2C, the cursor 4 is erased.

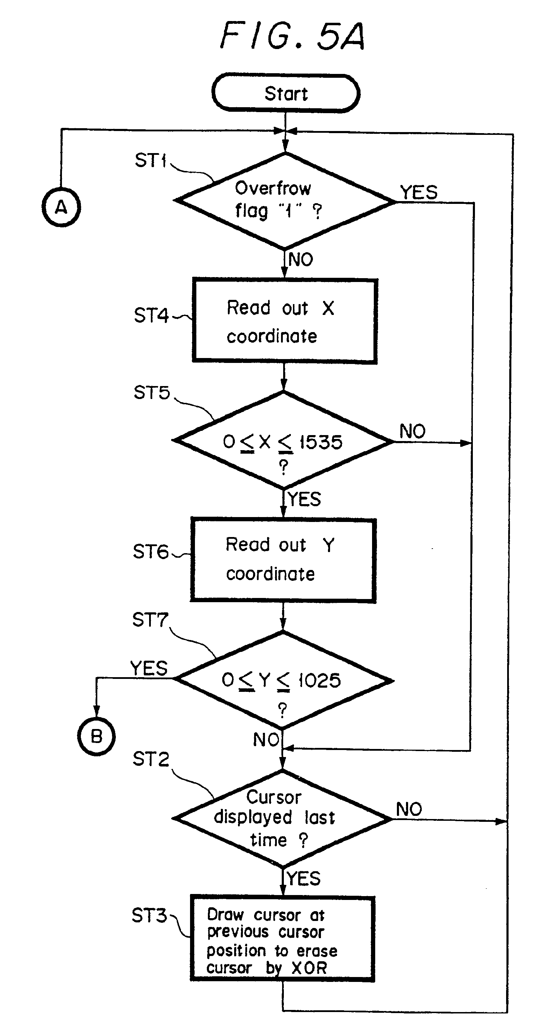

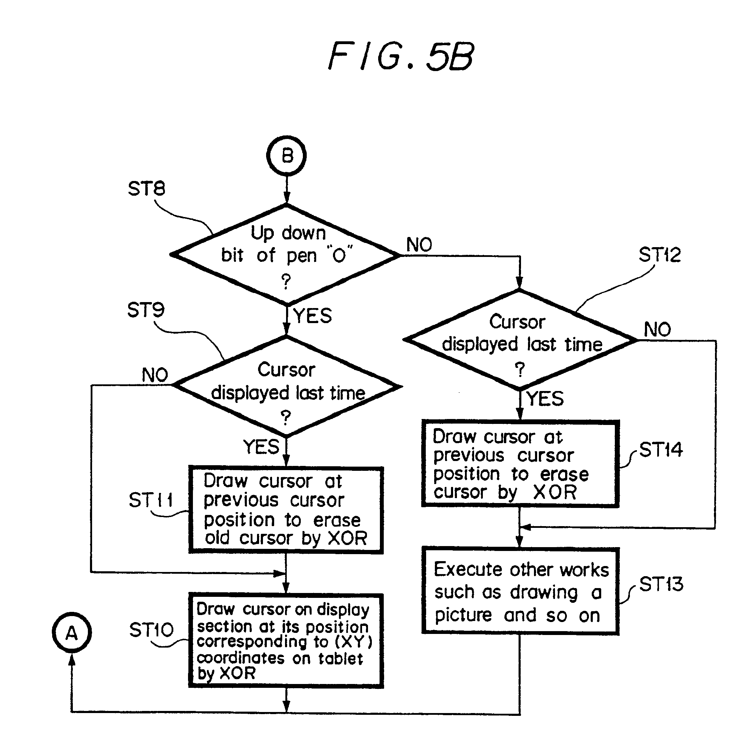

The display of the cursor 4 will be explained more in detail with reference to a flowchart of Figure 5. Following Start, it is always determined in decision stop ST1 whether an overflow flag is "1" or "0". When the input tablet 2 and the pen 3 are close to each other or touch each other so that the xy coordinates of the point of the pen 3 on the input tablet 2 can be detected, the overflow flag is "0", whereas in other cases such as when the point of the pen 3 is distant from the input tablet 2, the overflow flag is "1". The position of the point of the pen 3 on the input tablet 2 is detected by the CPU 21 by means of the change of electrostatic capacity, the change of magnetic field or the like.

If the overflow flag is "1" as represented by a YES at step ST1, then the processing proceeds to the next decision step ST2. In step ST2, it is determined whether or not the cursor 4 was displayed last time. If the cursor 4 was not displayed last time as represented by a NO at step ST2, then the processing returns to step ST1, whereat it is repeatedly determined whether or not the overflow flag is "1". If the cursor 4 was displayed last time as represented by a YES at step ST2, then the processing proceeds to step ST3, in which the cursor 4 is erased and it is determined whether or not the overflow flag is "1". In that case, when the cursor 4 is erased, a cursor is drawn on the position of the cursor 4 by supplying the signal indicative of the display of the previous cursor 4 to an exclusive-OR (XOR) circuit.

If the overflow flag is "0" as represented by a NO at stop ST1, then the processing proceeds to step ST4, whereat an x coordinate is read out. Then, the processing proceeds to the next decision step ST5, in which it is determined whether or not the x coordinate falls in a range of $0 \leq x \leq 1535$. If the x coordinate if out of this range, the x coordinate lies outside of the coordinates on the input tablet 2. Therefore, the processing proceeds to decision step ST2, whereat it is determined whether or not the cursor 4 was displayed last time. At that time, if the cursor 4 was displayed last time as represented by a YES at step ST2, then the cursor 4 is erased at step ST3.

If it is determined that the x coordinate lies in the range of $0 \leq x \leq 1535$, then the processing proceeds to step ST6, whereat a y coordinate is read out. Then, the processing proceeds to the next decision step ST7, whereat it is determined whether or not the y coordinate falls in a range of $0 \leq y \leq 1025$. If the y coordinate is outside of this range as represented by a NO at step ST7, the y coordinate is outside of the coordinates on the input tablet 2, and the processing proceeds to decision step ST2, whereat it is determined whether or not the cursor 4 was displayed last time. If the cursor 4 was displayed last time as represented by a YES at step ST2, then the cursor 4 is erased at step ST3.

If the y coordinate falls within the range of $0 \leq y \leq 1025$ as represented by a YES at step ST7 and the pen 3 is placed on the input tablet 2, then the processing proceeds to step ST8, whereat it is determined whether or not an up/down bit of the pen 3 is "0". In that case, when the point of the pen 3 touches the input tablet 2, the up/down bit of the pen 3 becomes "1". While the point of the pen 3 is not placed in the pen-down state on the input tablet 2, then the up/down bit of the pen 3 becomes "0". If the up/down bit is "0" as represented by a YES at step ST8, then the processing proceeds to the next decision step ST9, whereat it is determined whether or not the cursor 4 was displayed last time. If the cursor 4 was not displayed last time as represented by a NO at step ST9, then the processing proceeds to step ST10, whereat the cross-shaped cursor 4 is drawn on the display section 1 at its position corresponding to the above mentioned xy coordinate position on the input tablet 2 via the XOR circuit. In that case, when the cursor 4 is drawn via the XOR circuit, the cursor 4 is displayed black on the white background of the display section 1, or white on the black background of the display section 1.

If the cursor 4 was displayed last time as represented by a YES at step ST9, then the processing proceeds to the next step ST11, whereat the cursor 4 is drawn on the position in which the cursor 4 was displayed last time thereby to erase the previous cursor 4, and then the cross-shaped cursor 4 is displayed on the display section 1 at its position corresponding to the xy coordinate position on the input tablet 2 via the XOR circuit.

If the pen up/down bit of the pen 3 is "1" as represented by a NO at step ST8 and the point of the pen 3 is pen-down on the input tablet 2, then the processing proceeds to the next decision step ST12, whereat it is determined whether or not the cursor 4 was displayed last time or it is determined whether or not the pen 3 is placed in the pen-down state on the input tablet 2. If the cursor 4 was not displayed last time as represented by a NO at step ST12, then the processing proceeds to step ST13, wherein other works such as the drawing of a picture and so on are executed by using the pen 3 at step ST13. If the cursor 14 was displayed last time as represented by a YES at step ST12, then the processing proceeds to step ST14, whereat the previous cursor 4 is drawn on the cursor position via the XOR circuit thereby to erase the previous cursor 4, and then other works such as the drawing of a picture are executed by the user of the pen 3.

In this embodiment, when the pen 3 becomes close to the input tablet 2, the cross-shaped cursor 4 is displayed at the corresponding position of the display section 1. There is then the advantage that the future position at which the pen 3 touches the input tablet 2 next can be known beforehand. Also, when the pen 3 is placed in the pen-down state on the input tablet 2, the cursor 4 is erased. Thus, when the user draws a picture with the pen 3, the user can be protected from troubles such as the flickering of the cursor in front of the point of the pen 3. When the point of the pen 3 is placed in the pen-down state on the input tablet 2, the point of the pen 3 indicates the contact point so that the cursor 4 need not be displayed.

Further, since the cursor 4 is not displayed while a picture is drawn, there is then the advantage that a small CPU of a relatively low operation speed can be utilized.

Furthermore, when the pen 3 is distant from the input tablet 2 by a relatively long distance, the cursor 4 is not displayed.

The remaining construction of the embodiment can be of known form.

## Claims

1. A hand-written information input apparatus comprising:

   a display section (1) for displaying predetermined video image data and a cursor (4) at a position corresponding to coordinates of a pen (3); an input section (2) arranged upon said display section (1) for inputting coordinate information;

   said pen (3) for instructing coordinates on said input section (2);

   first cursor display control means (21) for displaying said cursor at a corresponding position on said display section (1) when said pen (3) is located within a first predetermined distance from said input section (2); and

   second cursor display control means (21) for erasing said cursor (4) on said display section (1) when said pen (3) is located within a second predetermined distance from said input section (2), said second predetermined distance being less than said first predetermined distance.

2. Apparatus according to claim 1 wherein said second cursor display control means (21) erases said cursor (4) on said display section (1) when said pen (3) is placed in its pen-down state.

3. Apparatus according to claim 2 wherein said pen-down state is detected by the contact of said pen with said input section (2).

4. Apparatus according to claim 1 wherein said second cursor display control means (21) comprises, judging means for judging a last time cursor display condition, cursor erasing means for erasing said cursor (4) on the basis of the judged result of judging means, and means for effecting an operation to be controlled by said coordinate information.

FIG. 1A

# FIG. 1B

EP 0 445 906 A1

*FIG. 2A*

3

1(2)

*FIG. 2B*

3

4

1(2)

*FIG. 2C*

3

1(2)

FIG. 3

*FIG. 4*

# FIG. 5A

Start

ST1 — Overfrow flag "1" ? — YES

A

NO

ST4 — Read out X coordinate

ST5 — 0 ≤ X ≤ 1535 ? — NO

YES

ST6 — Read out Y coordinate

ST7 — 0 ≤ Y ≤ 1025 ? — YES

B

NO

ST2 — Cursor displayed last time ? — NO

YES

ST3 — Draw cursor at previous cursor position to erase cursor by XOR

# F I G. 5B

## ⦵ European Patent Office

# EUROPEAN SEARCH REPORT

Application Number

EP 91 30 0256

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 242 598 (IBM) * Page 3, lines 9-11; page 6, line 34 - page 7, line 35; figures 4-6 * | 1-3 | G 06 F 3/033 |
| A | | 4 | |
| A | FR-A-2 438 874 (OPTION S.A.) * Claim 11 * | 1-3 | |
| | | | TECHNICAL FIELDS SEARCHED (Int. Cl.5) G 06 F |

The present search report has been drawn up for all claims

| Place of search | Date of completion of the search | Examiner |
|---|---|---|
| THE HAGUE | 31-05-1991 | CIARELLI N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

14